# FASCICULE DE BREVET EUROPEEN

(11) **EP 3 877 909 B1**
(45) Date de publication et mention de la délivrance du brevet: **25.09.2024**
(21) Numéro de dépôt: 19780270.5
(22) Date de dépôt: 09.10.2019
(51) Int. Cl.: G06K 19/077

(54) **MODULE ÉLECTRONIQUE POUR CARTE À PUCE**
ELEKTRONISCHES MODUL FÜR CHIPKARTE
ELECTRONIC MODULE FOR CHIP CARD

(30) Priorité: 08.11.2018 FR 1860297
(43) Date de publication de la demande: 15.09.2021
(73) Titulaire: Smart Packaging Solutions, 13790 Rousset (FR)
(72) Inventeur: CALVAS, Bernard, 13790 ROUSSET (FR); VOLPE, Pierre, 13790 ROUSSET (FR)
(74) Mandataire: Nicolle, Olivier
(86) Numéro de dépôt international: PCT/EP2019/077275
(87) Numéro de publication internationale: WO 2020/094320

(56) Documents cités:
- WO-A1-2011/157693
- WO-A1-2014/191428
- US-A1- 2015 269 471

## Description

L'invention concerne un module électronique pour un objet portatif ayant une fonction dual, avec contact et sans contact, par exemple une carte à puce.

Les modules électroniques sont en général réalisés sur des circuits imprimés flexibles avec une ou deux couches en cuivre gravé et métallisé. Les plots de la puce du circuit intégré sont électriquement connectés aux plaques de contact du boîtier de connexion au moyen de fils conducteurs. Pour pouvoir relier électriquement le module électronique à un autre circuit électrique noyé dans le corps de carte, le module électronique comprend en outre une antenne ou une paire de plaques de contact internes à la puce, disposées sur la face cachée du boîtier de connexion. L'antenne est électriquement reliée à la puce via des plots et au moyen de fils conducteurs (wire bonding) ou par une technique de connexion directe utilisant des bossages conducteurs ou « bump ». Le type de substrat utilisé se révèle en général assez onéreux.

Dans le cas d'une carte dual, une antenne est intégrée dans le module et permet un couplage électromagnétique avec une antenne « booster » incorporée dans le support rigide de la carte.

La demande de brevet WO 2011/157693 divulgue un circuit imprimé multicouches composé d'un empilement de plusieurs couches électriques et de couches isolantes.

La demande de brevet US 2015/269471 décrit une structure de faible épaisseur comprenant une ouverture pour positionner une puce.

L'objet de l'invention est de proposer un nouveau module électronique pour carte à puce et un nouveau procédé de fabrication qui permet d'offrir une souplesse dans le design de l'antenne et aussi de diminuer les coûts de fabrication par l'association d'un film simple face comprenant les contacts et d'un complexe comprenant au moins une zone électriquement conductrice telle qu'une antenne, tout en assurant les fonctions habituelles avec contact et/ou sans contact.

L'invention concerne un procédé de fabrication d'un module électronique destiné à être implémenté dans un objet portatif dual comportant au moins les étapes suivantes :
- Utiliser un film simple face constitué par une ou plusieurs zones de contacts et une couche diélectrique comprenant un ou plusieurs orifices,
- Utiliser un seul substrat comprenant une ou plusieurs zones électriquement conductrices destinées à la communication sans contact de l'objet et comprenant au moins un plot de contact,
- Solidariser ledit film simple face et ledit substrat via une couche adhésive pour former un empilement support du module, ledit empilement support étant constitué du film simple face et dudit substrat et de la couche adhésive,
- Positionner un circuit intégré et le connecter aux zones de contacts du film simple face et au moins à un plot de contact d'au moins une desdites zones électriquement conductrices,
- Déposer une couche de protection englobant au moins ledit circuit intégré,
- Caractérisé en ce que l'on découpe une zone au centre de la au moins une desdites zones électriquement conductrices dudit substrat et on colle le circuit intégré directement sur la face arrière du film, opposée à la face du film portant les contacts.

On utilise, par exemple, un substrat comprenant au moins zone électriquement conductrice constituée de spires formant une antenne et au moins un plot de contact situé à au moins une extrémité de l'antenne.

Selon un mode de réalisation au moins une desdites zones électriquement conductrices est constituée d'au moins une surface de matériau conducteur.

Selon une autre variante, on réalise un ou plusieurs orifices au niveau du substrat, les orifices correspondant aux orifices situés dans le film afin de constituer des puits de soudure entre le circuit intégré et les zones de contacts.

On utilise, par exemple, un substrat ayant une ou plusieurs zones électriquement conductrices en aluminium pour former l'antenne ou les surfaces de matériau conducteur.

Le motif de la zone électriquement conductrice ou les surfaces de matériau conducteur peuvent être réalisés en utilisant une technique de gravure, un procédé additif par sérigraphie ou transfert.

L'invention concerne aussi un module électronique destiné à être implémenté dans un objet portatif comprenant une fonction avec contact, le module électronique comportant au moins les éléments suivants :
- Un film simple face constitué par une ou plusieurs zones de contacts et une couche diélectrique comprenant un ou plusieurs orifices,
- Un seul substrat comprenant une ou plusieurs zones électriquement conductrices destinées à la communication sans-contact, ledit substrat étant solidarisé au film simple face via une couche adhésive pour former un empilement support du module, ledit empilement support étant constitué du film simple face et dudit substrat et de la couche adhésive ;
- Au moins une zone électriquement conductrice comprenant au moins un plot de contact ;
- Un circuit intégré connecté aux zones de contacts du film simple face et au moins à un plot de contact d'au moins une desdites zones électriquement conductrices,
- Une couche de protection englobant au moins ledit circuit intégré,
- Caractérisé en ce que le substrat comprend au centre de la au moins une desdites zones électriquement conductrices une zone centrale évidée ayant une géométrie adaptée pour recevoir le circuit intégré et la couche de protection, et en ce que ledit circuit intégré est collé directement sur la face arrière du film, opposée à la face du film portant les contacts.

Le substrat comprend, par exemple, au moins une desdites zones électriquement conductrices se présentant sous la forme de spires comprenant à une extrémité un plot de connexion.

Il peut aussi comprendre au moins une desdites zones électriquement conductrices constituée d'au moins une surface de matériau conducteur.

Le substrat peut aussi comprendre une ou plusieurs perforations correspondant aux orifices du film simple face afin de réaliser la connexion du circuit intégré aux zones de contact.

Le diélectrique et/ou le substrat sont choisis parmi la liste suivante : le verre-époxy, le Naphtalate de Polyéthylène PEN, le Polyéthylène Téréphtalate PET, ou le chlorure de Polyvinyle PVC et le substrat portant l'antenne en PET ou en PVC.

D'autres caractéristiques et avantages de la présente invention apparaîtront mieux à la lecture de la description d'exemples de réalisation donnés à titre illustratif et nullement limitatif, annexée des figures qui représentent :
- Figure 1, schématiquement une carte à puce comportant un module électronique selon l'invention,
- Figure 2, une face avant du module électronique,
- Figure 3A, figure 3B, un film comprenant une antenne selon un premier mode de réalisation et figure 3C, une variante avec des plages métalliques pour une fonction sans contact,
- Figure 4A, 4B, un autre exemple de réalisation d'un film avec antenne qui n'est pas selon l'invention,
- Figure 5, une variante de réalisation évitant des connexions par crimp,
- Figure 6, une représentation du film comprenant l'antenne
- Figure 7, une illustration de l'étape de fabrication comprenant le perçage d'orifices dans le film portant l'antenne collé sur le support rigide du module,
- Figure 8, une autre illustration qui n'est pas selon l'invention de la figure 7,
- Figure 9, une représentation de l'assemblage du film avec contacts et du substrat comprenant la ou les antennes, et
- Figure 10, une illustration du module final.

La description qui suit est donnée à titre illustratif et nullement limitatif pour la fabrication d'un module pour une carte dual. Les étapes décrites ci-après peuvent, sans sortir du cadre de l'invention, être utilisées pour des modules électroniques destinés aux cartes de crédit, carte SIM pour téléphone portable, cartes de transport, d'identité, etc.

Pour des raisons de simplification de la description, les figures représentent un seul module, sachant que les antennes seront, dans la plupart des cas, fabriquées sur une laize de grande largeur (quelques dizaines de cm à plusieurs mètres), permettant une production plus importante.

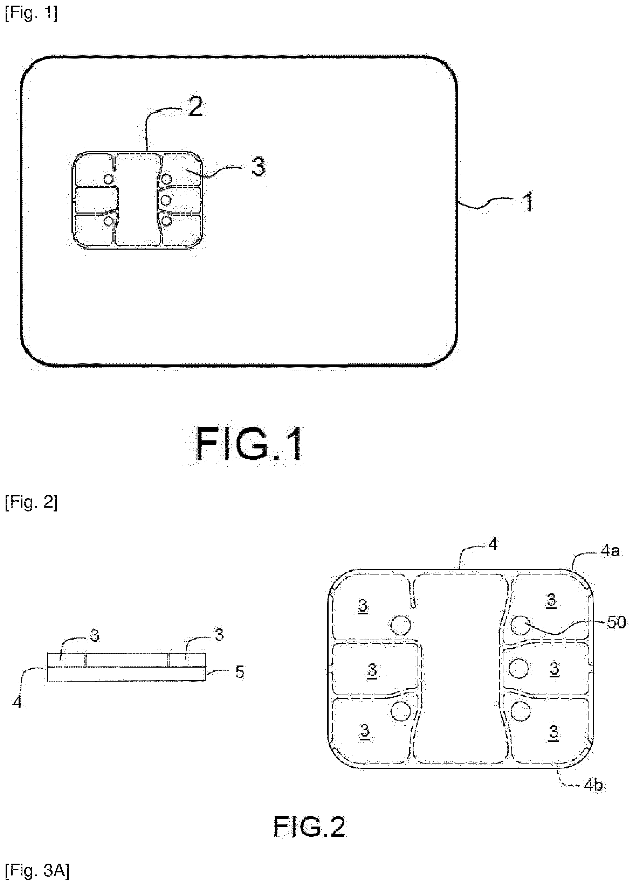

La figure 1 illustre une carte à puce 1 comprenant au moins un module électronique 2 obtenu par la mise en oeuvre du procédé selon l'invention. Le module électronique 2 intégré dans la carte à puce 1 présente des contacts 3 ou des zones de contact au niveau de la surface de la face avant de la carte afin de permettre sa connexion électrique avec un lecteur de carte, non représenté pour des raisons de simplification de dessins.

La figure 2 illustre le film simple face 4 à contact via sa face supérieure, face qui va être en contact avec le lecteur. Le film simple face 4 supporte les contacts 3 qui sont réalisés sur une face 4a et un diélectrique 5 sur l'autre face 4b. Des ouvertures 50 sont pratiquées dans le diélectrique 5 pour donner accès à tout ou partie des contacts. La position et les dimensions des contacts du module sont définies par la norme associée à l'utilisation de la carte, par exemple, la norme ISO.

La couche diélectrique peut aussi être une couche de polyimide ou PI. Les matériaux tels que le PEN (Naphtalate de polyéthylène), le PET (Polyéthylène téréphtalate) ou encore le PVC (Chlorure de polyvinyle) peuvent être utilisés. Le choix du matériau de la couche diélectrique est déterminé selon le compromis coût et fiabilité associé à la compatibilité avec les matières qui seront utilisées pour l'assemblage du circuit intégré et le report du module dans le corps d'une carte.

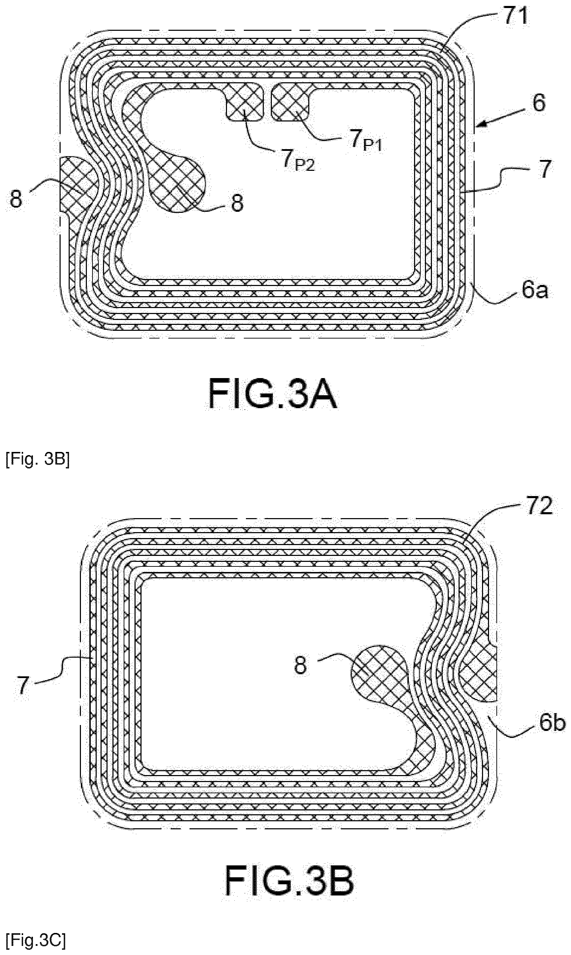

La réalisation de l'antenne 7 (figures 3A, 3B) se fait séparément de la fabrication du film comprenant les contacts. Le substrat 6 portant l'antenne, sera ensuite laminé sur le film portant les contacts. Pour la réalisation du module électronique, on utilisera un seul substrat

Les figures 3A et 3B illustrent respectivement une première face 6a et une deuxième face 6b d'un substrat 6 supportant une ou plusieurs zones électriquement conductrices telles que deux antennes 71, 72 (constituant les deux faces d'une antenne). L'antenne 71 comporte deux plots 7p1, 7p2, pour la connexion. Les figures 3A et 3B illustrent un « module antennaire» qui peut être réalisé sur un support souple en large laize comme il est connu de l'homme du métier. La réalisation de l'antenne se fait en utilisant, par exemple, une technique de gravure ou un procédé additif, procédé où la surface du motif voulu est activée pour permettre la croissance du conducteur ou le report direct du conducteur, par sérigraphie ou transfert, par exemple.

Le matériau utilisé pour réaliser l'antenne sera par exemple de l'aluminium ou tout autre matériau électriquement conducteur métallique présentant des propriétés équivalentes et qui seront compatibles avec le matériau adhésif utilisé pour solidariser le film à contact avec le substrat portant l'antenne.

Le substrat portant l'antenne est un support souple faible coût de type PET ou PVC ou encore fabriqué dans un des matériaux précités pour le diélectrique.

Selon une première variante de réalisation illustrée aux figures 3A, 3B, pour une antenne double face, les deux antennes 71, 72 sont connectées par crimp 8 (connexion électrique par sertissage entre des mors avec force et ultrasons). Les zones de crimp peuvent se présenter sous la forme de zones circulaires. La zone en bordure du module peut être découpée lors de la découpe du module.

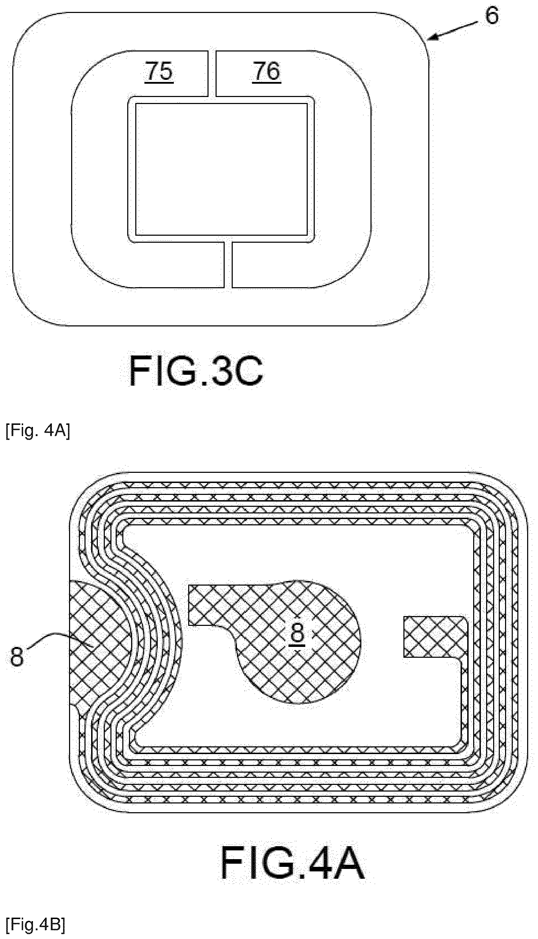

La figure 3C illustre une variante de réalisation dans laquelle l'antenne de la figure 3A est remplacée par au moins une surface électriquement conductrice, métallique permettant la communication pour une fonction sans contact de l'objet portatif. La plage métallique peut être constituée de deux surfaces électriquement conductrices, métalliques 75, 76, comme illustré à la figure 3C. Les deux surfaces forment deux plots de connexion pour une fonction sans contact ou permettent un couplage capacitif avec une antenne booster intégrée dans le corps de carte.

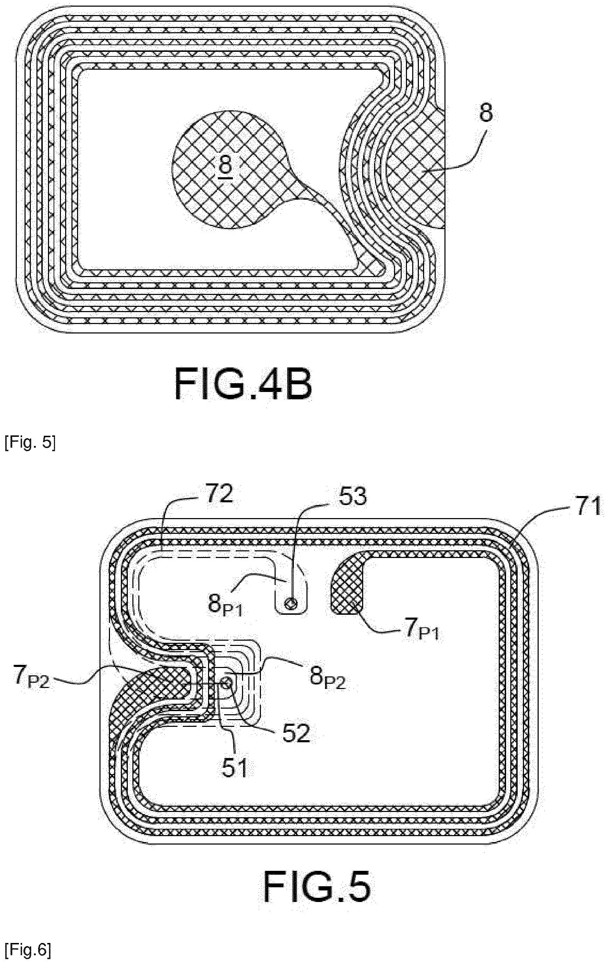

Les figures 4A et 4B illustrent une deuxième variante de réalisation qui n'est pas selon l'invention dans laquelle les zones de crimps 8 présentent une surface plus importante augmentant ainsi la performance de la connexion électrique.

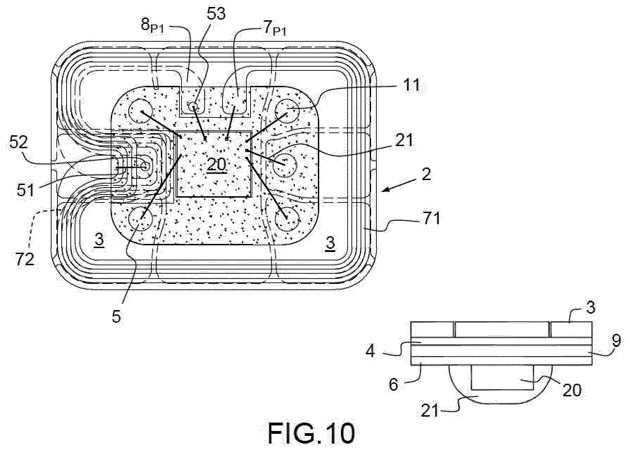

La figure 5 schématise une autre variante de réalisation, avec une antenne double face 71, 72, une des faces 72 de l'antenne étant illustrée par des pointillés. L'interconnexion des deux antennes est réalisée par l'utilisation d'un fil ou « strap » 51 passant par une première ouverture 52 ou via. La puce 20 (figure 10) sera connectée à une extrémité de l'antenne 71 située sur une première face au moyen d'un plot de connexion 7p1 et à un plot 8p1 de l'antenne 72 située sur la deuxième face, à travers un orifice 53 ou via. Les vias 52, 53, pourront être réalisés en même temps que la réalisation de l'antenne, par exemple par balayage laser. A la place du strap, il est possible d'utiliser un crimp (identique à celui de la figure 3A) pour relier les deux antennes 71, 72 constituant l'antenne. Deux zones de la face métallique arrière sont découvertes et nettoyées par combinaison de procédé pouvant inclure le laser, le plasma, une technique chimique.

Le support portant les contacts représentés à la figure 1 et le substrat portant l'antenne sont ensuite laminés ensemble.

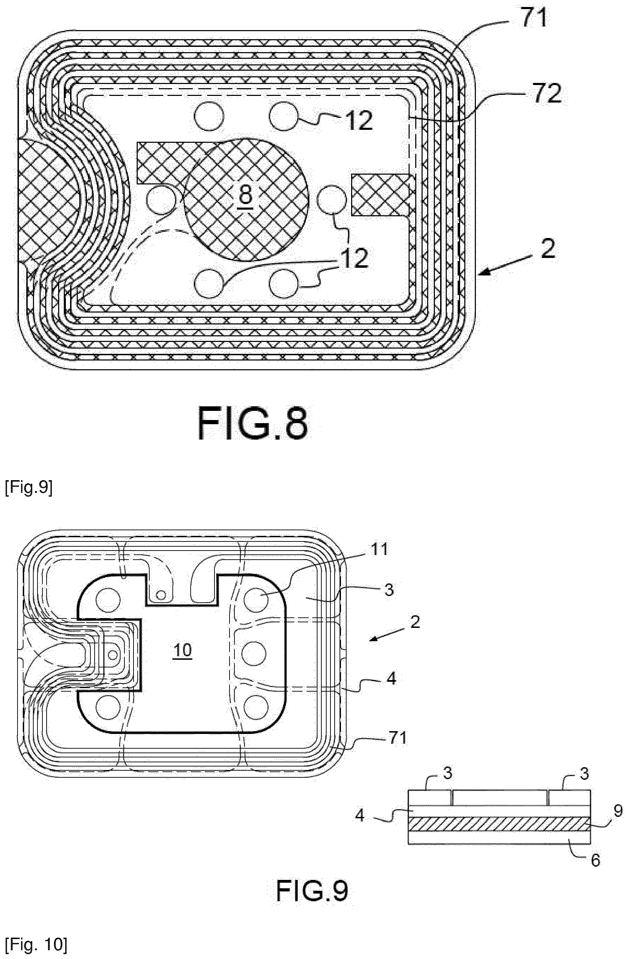

Pour cela, on vient déposer sur une face du substrat 6 portant l'antenne, un moyen adhésif 9 (couche adhésive figure 9) pour le solidariser à la face arrière 4b du film 4 à contact.

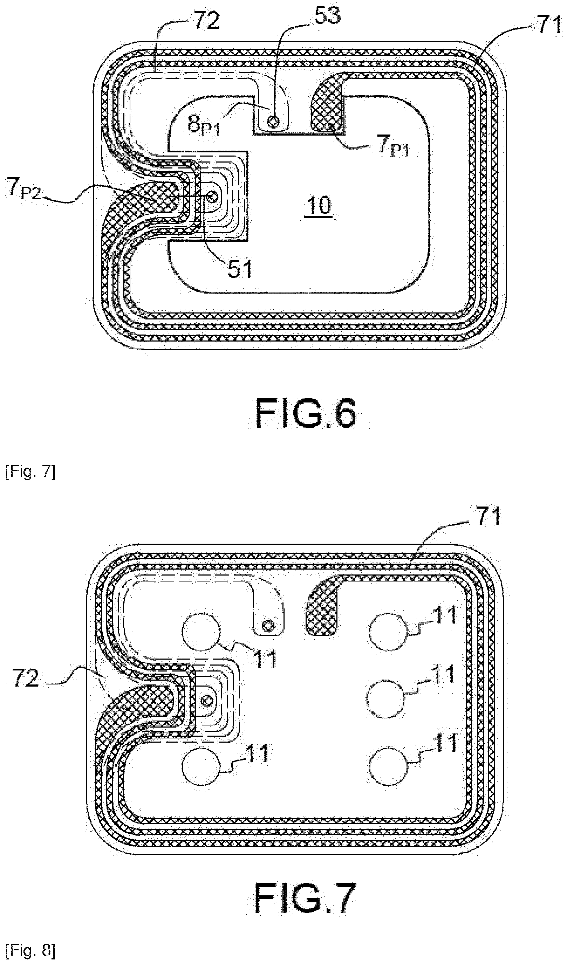

Selon un mode de réalisation selon l'invention illustré à la figure 6, une partie 10 est découpée au centre de l'antenne afin de permettre le collage direct d'une puce 20 (figure 10).

La découpe de l'ouverture peut être réalisée en utilisant une technique par laser et simultanément à celle des zones découvertes illustrées à la figure 5.

Ce type de découpe permettra de coller (souder) la puce directement sur le diélectrique (face arrière 4b - figure 1) du film portant les contacts. L'adhérence de la puce ne sera pas amortie par les couches diélectriques et adhésives supplémentaires. L'épaisseur finale du produit sera diminuée du fait de l'absence de couches intermédiaires entre la puce et le film à contacts.

D'autre part, cette découpe forme une zone qui sert de repère visuel et délimite physiquement le dépôt de la couche de protection 21 pour la puce et les connexions. La résine ou le matériau d'enrobage bénéficiera d'une bonne adhésion sur les diélectriques connus de l'homme du métier et maîtrisés de type de film.

Selon une autre variante de réalisation, le diélectrique est ouvert uniquement au niveau des puits de soudure. La figure 7 illustre les perforations 11 réalisées au niveau du substrat laissant apparaître des puits de soudure. Ces derniers seront utilisés pour connecter la puce aux plots de contact selon une technique connue de l'homme du métier. Le nombre de puits de soudure sera choisi en fonction de l'application.

La figure 8 illustre une autre variante qui n'est pas selon l'invention où les perforations 12 sont distribuées autour d'un crimp central 8.

Les antennes ainsi constituées peuvent être collées sur le film à contact, comme il est illustré à la figure 9. Le support est recoupé au format compatible avec l'assemblage, format film Super 35mm connu de l'homme du métier par exemple, pour constituer le film Dual Interface.

La figure 10 illustre une vue de dessus du résultat de l'assemblage du module électronique. Une puce 20 est collée sur la face du film opposée à la face portant les contacts, puis câblée sur les plots 7p1, 8p2 de l'antenne (71, 72) et via les puits de soudure 11 vers les contacts 3. Les deux faces de l'antenne sont interconnectées. On dispose ensuite une résine d'encapsulation qui protège la puce et les connexions.

Les étapes décrites ci-dessus peuvent être adaptées par un homme du métier dans le cas d'une antenne simple face. Le film simple face peut être une simple grille complexée avec un diélectrique.

Sans sortir du cadre de l'invention, les étapes décrites précédemment s'appliquent pour une antenne constituée de deux plots de connexion.

L'antenne peut aussi être constituée de deux surfaces ayant une géométrie et des dimensions choisies pour réaliser un couplage capacitif avec une antenne booster placé au coeur de la carte. Les zones seront positionnées par exemple autour du circuit intégré ou puce.

Le procédé selon l'invention ainsi que le module électronique obtenu par sa mise en oeuvre présentent notamment l'avantage de diminuer des coûts de fabrication, une souplesse dans le design des antennes.

## Revendications

1. - Procédé de fabrication d'un module électronique destiné à être implémenté dans un objet portatif dual comportant au moins les étapes suivantes :
• Utiliser un film simple face (4) constitué par une ou plusieurs zones de contacts (3) et une couche diélectrique (5) comprenant un ou plusieurs orifices (50),
• Utiliser un seul substrat (6) comprenant une ou plusieurs zones électriquement conductrices (7) destinées à la communication sans contact de l'objet et comprenant au moins un plot de contact (7p1, 7p2).
• Solidariser ledit film simple face (4) et ledit substrat (6) via une couche adhésive (9) pour former un empilement support (4, 6, 9) du module, ledit empilement support (4, 6, 9) étant constitué du film simple face (4) et dudit substrat (6) et de la couche adhésive (9)
• Positionner un circuit intégré (20) et le connecter aux zones de contacts (3) du film simple face et au moins à un plot de contact (7p1, 7p2) d'au moins une desdites zones électriquement conductrices (7),
• Déposer une couche de protection (21) englobant au moins ledit circuit intégré,
• **Caractérisé en ce que** l'on découpe une zone (10) au centre de la au moins une desdites zones électriquement conductrices (7) dudit substrat (6) et on colle le circuit intégré (20) directement sur la face arrière (4b) du film (4), opposée à la face (4a) du film portant les contacts (3)

2. - Procédé selon la revendication 1, **caractérisé en ce que** ledit substrat (6) comprend au moins une zone électriquement conductrice (7) constituée de spires formant une antenne (71, 72) et dans lequel l'au moins un plot de contact (7p1, 7p2) est situé à au moins une extrémité de l'antenne.

3. - Procédé selon la revendication 1, **caractérisé en ce qu'**au moins une desdites zones électriquement conductrices (7) est constituée d'au moins une surface de matériau conducteur.

4. - Procédé selon l'une des revendications précédentes, **caractérisé en ce que** l'on réalise un ou plusieurs orifices (52,53) au niveau du substrat (6) correspondant aux orifices (50) situés dans le film (4) afin de constituer des puits de soudure entre le circuit intégré (20) et les zones de contacts (3).

5. - Procédé selon l'une des revendications 2 à 4, **caractérisé en ce que** ledit substrat (6) ayant une ou plusieurs zones électriquement conductrices (7) en aluminium pour former l'antenne ou les surfaces de matériau conducteur.

6. - Procédé selon l'une des revendications précédentes, **caractérisé en ce que** l'on réalise le motif de la zone électriquement conductrice ou les surfaces de matériau conducteur en utilisant une technique de gravure, un procédé additif par sérigraphie ou transfert.

7. - Module électronique (2) destiné à être implémenté dans un objet portatif comprenant une fonction avec contact, le module électronique comportant au moins les éléments suivants :
• Un film simple face (4) constitué par une ou plusieurs zones de contacts (3) et une couche diélectrique (5) comprenant un ou plusieurs orifices (50),
• Un seul substrat (6) comprenant une ou plusieurs zones électriquement conductrices (7) destinées à la communication sans-contact, ledit substrat (6) étant solidarisé au film simple face (4) via une couche adhésive (9) pour former un empilement support (4, 6, 9) du module, ledit empilement support (4, 6, 9) étant constitué du film simple face (4) et du substrat (6) et de la couche adhésive (9) ;
• Au moins une zone électriquement conductrice (7) comprenant au moins un plot de contact (7p1, 7p2, 8p1) ;
• Un circuit intégré (20) connecté aux zones de contacts (3) du film simple face (4) et au moins à un plot de contact (7p1, 7p2) d'au moins une desdites zones électriquement conductrices (7),
• Une couche de protection (21) englobant au moins ledit circuit intégré,
• **Caractérisé en ce que** le substrat (6) comprend au centre de la au moins une desdites zones électriquement conductrices (7) une zone centrale (10) évidée ayant une géométrie adaptée pour recevoir le circuit intégré (20) et la couche de protection (21), et **en ce que** ledit circuit intégré (20) est collé directement sur la face arrière (4b) du film (4), opposée à la face (4a) du film (4) portant les contacts (3).

8. - Module selon la revendication 7, **caractérisé en ce que** au moins une desdites zones électriquement conductrices (7) se présentant sous la forme de spires (71, 72) et dans laquelle l'au moins un plot de connexion (7p1, 7p2) est situé à une extrémité.

9. - Module selon la revendication 7, **caractérisé en ce qu'**au moins une desdites zones électriquement conductrices (7) est constituée d'au moins une surface de matériau conducteur (75, 76).

10. - Module selon l'une des revendications 7 à 9, **caractérisé en ce que** le substrat (6) comprend une ou plusieurs perforations (52,53) correspondant aux orifices du film simple face (4) afin de réaliser la connexion du circuit intégré (20) aux zones de contact.

11. - Module selon l'une des revendications 7 à 10, **caractérisé en ce que** la couche diélectrique (5) et/ou le substrat (6) sont choisis parmi : le verre-époxy, le Naphtalate de Polyéthylène PEN, le Polyéthylène Téréphtalate PET, ou le chlorure de Polyvinyle PVC.

## Patentansprüche

1. - Verfahren zur Herstellung eines elektronischen Moduls, das zur Implementierung in ein duales tragbares Objekt bestimmt ist, wobei das Verfahren mindestens die folgenden Schritte umfasst:
- die Verwendung einer einseitigen Folie (4), die aus einem oder mehreren Kontaktbereichen (3) und einer dielektrischen Schicht (5) mit einer oder mehreren Öffnungen (50) besteht,
- die Verwendung eines einzelnen Substrats (6), das einen oder mehrere elektrisch leitende Bereiche (7) für die kontaktlose Kommunikation des Objekts und mindestens ein Kontaktpad (7p1, 7p2) umfasst,
- die feste Verbindung der einseitigen Folie (4) mit dem Substrat (6) über eine Klebschicht (9), um einen Trägerstapel (4, 6, 9) des Moduls zu bilden, wobei der Trägerstapel (4, 6, 9) aus der einseitigen Folie (4), dem Substrat (6) und der Klebschicht (9) besteht,
- die Positionierung einer integrierten Schaltung (20) und deren Verbindung mit den Kontaktbereichen (3) der einseitigen Folie und mindestens einem Kontaktpad (7p1, 7p2) von mindestens einem der elektrisch leitenden Bereiche (7),
- das Aufbringen einer Schutzschicht (21) zumindest auf die integrierte Schaltung,
- **dadurch gekennzeichnet, dass** man einen Bereich (10) in der Mitte von mindestens einem der elektrisch leitenden Bereiche (7) des Substrats (6) ausschneidet und die integrierte Schaltung (20) direkt auf die Rückseite (4b) der Folie (4) gegenüber der Seite (4a) der Folie mit den Kontakten (3) klebt.

2. - Verfahren nach Anspruch 1, **dadurch gekennzeichnet, dass** das Substrat (6) mindestens einen elektrisch leitenden Bereich (7) umfasst, der aus Windungen besteht, wobei diese eine Antenne (71, 72) bilden und das mindestens eine Kontaktpad (7p1, 7p2) an mindestens einem Ende der Antenne angeordnet ist.

3. - Verfahren nach Anspruch 1, **dadurch gekennzeichnet, dass** mindestens einer der elektrisch leitenden Bereiche (7) aus mindestens einer Leitermaterialfläche besteht.

4. - Verfahren nach einem der vorhergehenden Ansprüche, **dadurch gekennzeichnet, dass** im Substrat (6) eine oder mehrere Öffnungen (52, 53) hergestellt werden, die den Öffnungen (50) in der Folie (4) entsprechen, um Lötvertiefungen zwischen der integrierten Schaltung (20) und den Kontaktbereichen (3) zu bilden.

5. - Verfahren nach einem der Ansprüche 2 bis 4, **dadurch gekennzeichnet, dass** das Substrat (6) einen oder mehrere elektrisch leitende Bereiche (7) aus Aluminium aufweist, um die Antenne oder die Leitermaterialfläche zu bilden.

6. - Verfahren nach einem der vorhergehenden Ansprüche, **dadurch gekennzeichnet, dass** das Muster des elektrisch leitenden Bereichs oder die Leitermaterialflächen unter Verwendung einer Ätztechnik, eines additiven Siebdruckverfahrens oder eines Übertragungsverfahrens hergestellt werden.

7. - Elektronisches Modul (2), das dazu bestimmt ist, in einem tragbaren Gegenstand mit Kontaktfunktion implementiert zu werden, wobei das elektronische Modul mindestens folgende Elemente umfasst:
• eine einseitige Folie (4) bestehend aus einem oder mehreren Kontaktbereichen (3) und einer dielektrischen Schicht (5) mit einer oder mehreren Öffnungen (50),
• ein einzelnes Substrat (6) mit einem oder mehreren elektrisch leitenden Bereichen (7) für eine kontaktlose Kommunikation, wobei das Substrat (6) über eine Klebschicht (9) fest mit der einseitigen Folie (4) verbunden ist, um einen Trägerstapel (4, 6, 9) des Moduls zu bilden, wobei der Trägerstapel (4, 6, 9) aus der einseitigen Folie (4) und dem Substrat (6) und der Klebschicht (9) besteht;
• mindestens einen elektrisch leitenden Bereich (7) mit mindestens einem Kontaktpad (7p1, 7p2, 8p1);
• eine integrierte Schaltung (20), die mit den Kontaktbereichen (3) der einseitigen Folie (4) und mindestens einem Kontaktpad (7p1, 7p2) mindestens eines der elektrisch leitenden Bereiche (7) verbunden ist;
• eine Schutzschicht (21) zumindest auf der integrierten Schaltung,
• **dadurch gekennzeichnet, dass** das Substrat (6) in der Mitte des mindestens einen der elektrisch leitenden Bereiche (7) einen ausgesparten zentralen Bereich (10) mit einer Geometrie umfasst, die geeignet ist, die integrierte Schaltung (20) und die Schutzschicht (21) aufzunehmen, und dadurch dass die integrierte Schaltung (20) direkt auf die Rückseite (4b) der Folie (4) gegenüber der Seite (4a) der Folie (4) mit den Kontakten (3) geklebt ist.

8. - Modul nach Anspruch 7, **dadurch gekennzeichnet, dass** mindestens einer der elektrisch leitenden Bereiche (7) in Form von Windungen (71, 72) vorliegt und sich darin das mindestens eine Anschlusspad (7p1, 7p2) an einem Ende befindet.

9. - Modul nach Anspruch 7, **dadurch gekennzeichnet, dass** mindestens einer der elektrisch leitenden Bereiche (7) aus mindestens einer Leitermaterialfläche (75, 76) besteht.

10. - Modul nach einem der Ansprüche 7 bis 9, **dadurch gekennzeichnet, dass** das Substrat (6) eine oder mehrere Perforationen (52, 53) den Öffnungen der einseitigen Folie entsprechend umfasst (4), um die Verbindung der integrierten Schaltung (20) mit den Kontaktbereichen herzustellen.

11. - Modul nach einem der Ansprüche 7 bis 10, **dadurch gekennzeichnet, dass** die dielektrische Schicht (5) und/oder das Substrat (6) ausgewählt sind aus: Epoxydglasfaser, Polyethylen-Naphthalat PEN, Polyethylen-Terephthalat PET oder Polyvinylchlorid PVC.

## Claims

1. - Method of manufacturing an electronic module intended to be implemented in a dual portable object comprising at least the following steps:
- Use a single-sided film (4) consisting of one or more contact areas (3) and a dielectric layer (5) comprising one or more apertures (50),
- Use a single substrate (6) comprising one or more electrically conductive areas (7) intended for contactless communication of the object and comprising at least one contact pad (7p1, 7p2).
- Bond said single-sided film (4) and said substrate (6) via an adhesive layer (9) to form a support stack (4, 6, 9) of the module, said support stack (4, 6, 9) consisting of the single-sided film (4) and said substrate (6) and the adhesive layer (9)
- Position an integrated circuit (20) and connect it to the contact areas (3) of the single-sided film and to at least one contact pad (7p1, 7p2) of at least one of said electrically conductive areas (7),
- Apply a protective layer (21) including at least said integrated circuit,
- **Characterised in that** an area (10) is cut out in the centre of the at least one of said electrically conductive areas (7) of said substrate (6) and the integrated circuit (20) is bonded directly to the rear face (4b) of the film (4), opposite the face (4a) of the film carrying the contacts (3).

2. - Method according to claim 1, **characterised in that** said substrate (6) comprises at least one electrically conductive area (7) consisting of turns forming an antenna (71, 72) and in which the at least one contact pad (7p1, 7p2) is located at at least one end of the antenna.

3. - Method according to claim 1, **characterised in that** at least one of said electrically conductive areas (7) consists of at least one surface of conductive material.

4. - Method according to one of the previous claims, **characterised in that** one or more apertures (52, 53) are made in the substrate (6) corresponding to the apertures (50) located in the film (4) in order to form soldering wells between the integrated circuit (20) and the contact areas (3).

5. - Method according to any of claims 2 to 4, **characterised in that** said substrate (6) has one or more electrically conductive areas (7) in aluminium to form the antenna or the conductive material surfaces.

6. - Method according to one of the previous claims, **characterised in that** the pattern of the electrically conductive area or surfaces of conductive material is produced using an etching technique, an additive process by screen printing or transfer.

7. - Electronic module (2) intended to be implemented in a portable object comprising a contact function, the electronic module comprising at least the following elements:
• A single-sided film (4) consisting of one or more contact areas (3) and a dielectric layer (5) comprising one or more apertures (50),
• A single substrate (6) comprising one or more electrically conductive areas (7) for contactless communication, said substrate (6) being bonded to the single-sided film (4) via an adhesive layer (9) to form a support stack (4, 6, 9) of the module, said support stack (4, 6, 9) consisting of the single-sided film (4) and the substrate (6) and the adhesive layer (9);
• At least one electrically conductive area (7) comprising at least one contact pad (7p1, 7p2, 8p1)
• An integrated circuit (20) connected to the contact areas (3) of the single-sided film (4) and to at least one contact pad (7p1, 7p2) of at least one of said electrically conductive areas (7),
• A protective layer (21) including at least said integrated circuit,
• **Characterised in that** the substrate (6) comprises in the centre of at least one of said electrically conductive areas (7) a central recessed area (10) having a geometry adapted to receive the integrated circuit (20) and the protective layer (21), and **in that** said integrated circuit (20) is bonded directly to the rear face (4b) of the film (4), opposite the face (4a) of the film (4) carrying the contacts (3).

8. - Module according to claim 7, **characterised in that** at least one of said electrically conductive areas (7) is in the form of turns (71, 72) and in which the at least one connection pad (7p1, 7p2) is located at one end.

9. - Module according to claim 7, **characterised in that** at least one of said electrically conductive areas (7) consists of at least one surface of conductive material (75, 76).

10. - Module according to one of claims 7 to 9, **characterised in that** the substrate (6) comprises one or more perforations (52, 53) corresponding to the apertures in the single-sided film (4) in order to connect the integrated circuit (20) to the contact areas.

11. - Module according to one of claims 7 to 10, **characterised in that** the dielectric layer (5) and/or the substrate (6) are chosen from: epoxy glass, polyethylene naphthalate PEN, polyethylene terephthalate PET, or polyvinyl chloride PVC.
